# EUROPÄISCHE PATENTSCHRIFT

(11) **EP 1 497 615 B1**
(45) Veröffentlichungstag und Bekanntmachung des Hinweises auf die Patenterteilung: **01.08.2012**
(21) Anmeldenummer: 03727170.7
(22) Anmeldetag: 02.04.2003
(51) Int. Cl.: G01S 17/02, G01S 17/06, G01C 3/08, G01S 7/51

(54) **ENTFERNUNGSMESSGERÄT**
DISTANCE MEASURING DEVICE
APPAREIL DE MESURE DE LA DISTANCE

(30) Priorität: 12.04.2002 DE 10216207
(43) Veröffentlichungstag der Anmeldung: 19.01.2005
(73) Patentinhaber: ROBERT BOSCH GMBH, 70442 Stuttgart (DE)
(72) Erfinder: SKULTETY-BETZ, Uwe, 70771 Leinfelden-Echterdingen (DE); CLAUDIUS, Tobias, 70193 Stuttgart (DE)
(74) Vertreter: Daub, Thomas
(86) Internationale Anmeldenummer: PCT/DE2003/001080
(87) Internationale Veröffentlichungsnummer: WO 2003/087718

(56) Entgegenhaltungen:
- WO-A2-90/12330
- US-A- 4 730 190
- US-A- 5 949 529
- US-A- 6 037 874

## Beschreibung

### Stand der Technik

Die Erfindung geht aus von einem Entfernungsmeßgerät gemäß dem Oberbegriff des Anspruchs 1.

Es sind Laser-Entfernungsmeßgeräte bekannt, die mittels eines Lasers die Entfernung zu einem Zielobjekt ermitteln. Bei der Bestimmung des horizontalen Abstands muß der Laserstrahl hierbei möglichst exakt horizontal ausgerichtet werden, um Meßfehler zu vermeiden.

WO 90/12330 offenbart ein Laserentfernungsmessgerät, welches einen integrierten Neigungsmesser aufweist. Der Neigungsmesser ist über eine Steuereinheit mit einem Display in einem Okular verbunden, so dass ein Benutzer den Neigungswinkel während eines Betriebs des Laserentfernungsmessgeräts vorteilhaft einfach und bequem ablesen kann.

Hierzu weisen bekannte Laser-Entfernungsmeßgeräte sogenannte Röhrenlibellen auf, an denen der Benutzer die Neigung des Entfernungsmeßgeräts gegenüber der Horizontalen erkennen kann.

Bei dieser Art der Ausrichtung des Laser-Entfernungsmeßgeräts muß der Benutzer also gleichzeitig das zu vermessende Zielobjekt anvisieren und die Röhrenlibelle betrachten, was insbesondere bei handgehaltenen Entfernungsmeßgeräten schwierig ist.

Es sind weiterhin Laser-Entfernungsmeßgeräte bekannt, bei denen mittels eines eingebauten Neigungssensors die Neigung des Laser-Entfernungsmeßgeräts ermittelt wird, um die gemessene Entfernung anhand trigonometrischer Beziehungen nachträglich zu korrigieren.

### Vorteile der Erfindung

Die Erfindung geht aus von einem Entfernungsmeßgerät, insbesondere handgehaltenes Laser-Entfernungsmeßgerät, mit einem Lagesensor zur Ermittlung der räumlichen Ausrichtung des Entfernungsmeßgeräts, wobei der Lagesensor mit einem Signalgeber verbunden ist und wobei der Signalgeber, welcher ein optischer Signalgeber ist, von dem Lagesensor zur Abgabe eines von der räumlichen Ausrichtung abhängigen und sinnlich wahrnehmbaren Signals ansteuerbar ist.

Es wird vorgeschlagen, dass der optische Signalgeber (12) ein Laser ist, der Licht im sichtbaren Wellenlängenbereich emittiert und zur Entfernungsmessung dient.

Der Benutzer kann sich also bei der Bedienung des Entfernungsmeßgeräts auf das Anvisieren des Zielobjekts konzentrieren und wird dabei durch den Signalgeber über die räumliche Ausrichtung des Entfernungsmeßgeräts informiert.

Bei dem Signalgeber kann es sich beispielsweise um den optischen Signalgeber, einen optischen und akustischen Signalgeber oder einen optischen und taktilen Signalgeber handeln. Vorzugsweise ist die Intensität, die Farbe, die Helligkeit, die Blinkfrequenz und/oder die Blinkdauer von der räumlichen Ausrichtung des Entfernungsmeßgeräts abhängig. Beispielsweise kann die Blinkfrequenz mit zunehmender Annäherung der Ausrichtung des Entfernungsmeßgeräts an die Horizontale erhöht werden, bis der optische Signalgeber schließlich dauerhaft leuchtet, wenn das Entfernungsmeßgerät annähernd horizontal ausgerichtet ist. Es ist jedoch alternativ auch möglich, daß bei konstanter Blinkfrequenz die Dauer der einzelnen Blinkimpulse mit der Abweichung gegenüber der Horizontalen verändert wird.

Es handelt sich bei dem optischen Signalgeber um den Laser, der auch zur Entfernungsmessung verwendet wird. Dies bietet den Vorteil, daß auf einen separaten Signalgeber verzichtet werden kann, was eine kostengünstige Fertigung ermöglicht.

In einer anderen Variante der Erfindung wird als Signalgeber ein optischer und akustischer Signalgeber eingesetzt, der ein von der räumlichen Ausrichtung des Entfernungsmeßgeräts abhängiges akustisches Signal abgibt. Hierzu kann beispielsweise ein herkömmlicher Lautsprecher verwendet werden, jedoch sind auch andere elektro-akustische Wandler einsetzbar.

Das von dem akustischen Signalgeber abgegebene Signal kann beispielsweise in Abhängigkeit von der räumlichen Ausrichtung des Entfernungsmeßgeräts in der Tonhöhe bzw. Tonfrequenz, der Lautstärke, der Wiederholfrequenz und/oder der Dauer verändert werden, um dem Benutzer die räumliche Ausrichtung des Entfernungsmeßgeräts anzugeben. Beispielsweise kann der akustische Signalgeber in vorgegebenen Intervallen Piepstöne abgeben, wobei die Intervalldauer mit zunehmender Annäherung des Entfernungsmeßgeräts an die Horizontale kleiner wird, bis der akustische Signalgeber schließlich einen Dauerpiepston abgibt, wenn sich das Entfernungsmeßgerät annähernd in der Horizontalen befindet.

Ferner besteht auch die Möglichkeit, daß der Signalgeber ein optischer und taktiler Signalgeber ist, der dem Benutzer ein fühlbares taktiles Signal gibt, das von der räumlichen Ausrichtung des Entfernungsmeßgeräts abhängt. Beispielsweise kann bei handgehaltenen Entfernungsmeßgeräten in einen Griff des Entfernungsmeßgeräts ein elektro-mechanischer Aktor eingebaut sein, der ein taktiles Signal an die Hand des Benutzers überträgt. Bei dem taktilen Signal kann es sich beispielsweise um eine Folge von Druckstößen handeln, wobei die Intervalldauer zwischen den einzelnen Druckstößen in Abhängigkeit von der räumlichen Ausrichtung des Entfernungsmeßgeräts variiert wird. Beispielsweise kann die Intervalldauer mit zunehmender Annäherung des Entfernungsmeßgeräts an die Horizontale verringert werden. Es ist jedoch auch möglich, einen Vibrationsgenerator als taktilen Signalgeber einzusetzen, der ein Vibrationssignal erzeugt, solange das Entfernungsmeßgerät nicht richtig ausgerichtet ist.

In der bevorzugten Ausführungsform der Erfindung ist der Lagesensor ein Neigungssensor, der den Neigungswinkel des Entfernungsmeßgeräts mißt. Der Neigungssensor ist vorzugsweise so angeordnet, daß der gemessene Neigungswinkel gleich dem Winkel zwischen dem Laserstrahl und der Horizontalen oder der Vertikalen ist.

Es ist jedoch alternativ auch möglich, daß der Lagesensor nicht den Elevationswinkel mißt, sondern den Winkel in einer horizontalen Ebene. Dies kann beispielsweise vorteilhaft sein, wenn nacheinander verschiedene Zielobjekte anvisiert werden, die in einer horizontalen Ebene liegen und einen vorgegebenen Winkel einschließen sollen, um anschließend anhand der Meßergebnisse trigonometrische Berechnungen durchführen zu können. So kann der Lagesensor beispielsweise einen Kompaß beinhalten, was eine entsprechende Winkelmessung ermöglicht.

Vorzugsweise werden die gemessenen Elevations- oder Azimuthwinkel hierbei mit einem vorgegebenen Sollwert verglichen. Bei dem eingangs beschriebenen Beispiel einer horizontalen Entfernungsmessung entspricht dieser Sollwert üblicherweise der Horizontalen mit einem Elevationswinkel von Null Grad. Bei einer vertikalen Höhenmessung entspricht der Sollwert dagegen vorzugsweise einem Elevationswinkel von 90 Grad.

In einer vorteilhaften Variante der Erfindung ermöglicht das Entfernungsmeßgerät sowohl eine horizontale Entfernungsmessung als auch eine vertikale Höhenmessung, in dem der jeweilige Sollwert entsprechend eingestellt wird. Diese Einstellung des Sollwerts für den Neigungswinkel kann beispielsweise manuell durch den Benutzer erfolgen, indem der Benutzer die gewünschte Betriebsart über eine Eingabeeinheit des Entfernungsmeßgeräts eingibt.

In einer Variante der Erfindung ist dagegen vorgesehen, daß das Entfernungsmeßgerät den Sollwinkel selbständig einstellt. Beispielsweise kann der Sollwinkel auf Null Grad entsprechend der Horizontalen eingestellt werden, wenn der aktuell gemessene Elevationswinkel zwischen -30 Grad und +30 Grad liegt. Der Sollwinkel wird dagegen auf 90 Grad entsprechend der Vertikalen eingestellt, wenn der aktuell gemessene Elevationswinkel zwischen +60 Grad und +120 Grad liegt. In dieser Variante der Erfindung muß der Benutzer also das Entfernungsmeßgerät nur grob horizontal oder vertikal ausrichten, woraufhin dann der zugehörige Sollwert automatisch eingestellt wird.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung eines erfindungsgemäßen Laser-Entfernungsmeßgeräts,
- Fig. 2: ein vereinfachtes Blockschaltbild des Laser-Entfernungsmeßgeräts aus Figur 1,
- Fig. 3: ein Blockschaltbild eines alternativen Laser-Entfernungsmeßgeräts mit einem Lautsprecher,
- Fig. 4: ein Blockschaltbild eines alternativen Laser-Entfernungsmeßgeräts mit einer Signallampe sowie
- Fig. 5: ein Blockschaltbild eines alternativen Laser-Entfernungsmeßgeräts mit einem taktilen Signalgeber.

### Beschreibung der Ausführungsbeispiele

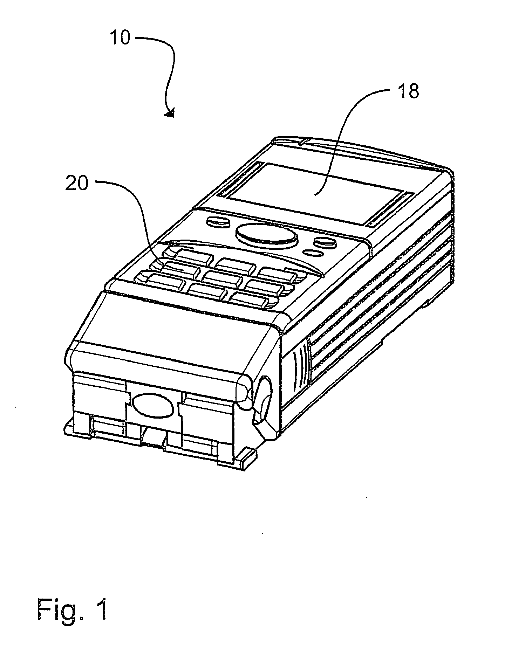

Die perspektivische Darstellung in Figur 1 zeigt ein handgehaltenes Laser-Entfernungsmeßgerät 10, das ohne ein Stativ eine präzise Entfernungsmessung ermöglicht. Hierzu gibt das Laser-Entfernungsmeßgerät 10 an seiner Vorderseite in herkömmlicher Weise einen Laserstrahl ab, der auf das zu vermessende Zielobjekt gerichtet und an diesem reflektiert wird. Aus der Laufzeit des Laserstrahls zwischen der Abgabe durch das Laser-Entfernungsmeßgerät 10 und dem anschließenden Empfang kann dann die Entfernung zu dem zu vermessenden Zielobjekt berechnet werden.

Hierzu weist das Laser-Entfernungsmeßgerät 10 einen eingebauten Laser 12 auf, der von einer Steuereinheit 14 angesteuert wird.

Zum Empfang des an dem Zielobjekt reflektierten Laserstrahls weist das Laser-Entfernungsmeßgerät 10 weiterhin einen optischen Sensor 16 auf, der ebenfalls mit der Steuereinheit 14 verbunden ist, so daß die Steuereinheit 14 die Entfernung zu dem zu vermessenden Zielobjekt berechnet und ein entsprechendes Entfernungssignal d an ein Display 18 ausgibt, das an der Oberseite des Laser-Entfernungsmeßgeräts 10 angeordnet ist. Die Bedienung des Laser-Entfernungsmeßgeräts 10 erfolgt über eine Tastatur 20, die ebenfalls an der Oberseite des Laser-Entfernungsmeßgeräts 10 angeordnet ist.

Die Besonderheit des Laser-Entfernungsmeßgeräts 10 besteht in der erleichterten räumlichen Ausrichtung während des Meßvorgangs. So muß das Laser-Entfernungsmeßgerät 10 während einer horizontalen Entfernungsmessung möglichst exakt horizontal ausgerichtet werden, da ansonsten Meßfehler auftreten. Entsprechend muß das Laser-Entfernungsmeßgerät 10 bei einer vertikalen Höhenmessung möglichst exakt senkrecht ausgerichtet werden, um eine hohe Meßgenauigkeit zu erreichen.

Das Laser-Entfernungsmeßgerät 10 weist deshalb einen integrierten Neigungssensor 22 auf, der die Neigung des Laser-Entfernungsmeßgeräts 10 mißt und einen entsprechenden Neigungswinkel α ausgibt. Der Neigungssensor 22 ist hierbei in dem Laser-Entfernungsmeßgerät 10 so angeordnet, daß der Neigungswinkel α den Winkel angibt, den der Laserstrahl mit der Horizontalen einschließt.

Ausgangsseitig ist der Neigungssensor 22 mit einer Vergleichereinheit 24 verbunden, die den gemessenen Neigungswinkel α mit einem vorgegebenen Sollwinkel α_{SOLL} vergleicht, den der Benutzer an der Tastatur 20 eingeben bzw. auswählen kann. Für eine horizontale Entfernungsmessung gibt der Benutzer dann an der Tastatur 20 einen Sollwinkel von α_{SOLL}=0° ein, was der Horizontalen entspricht, wohingegen der Benutzer bei einer vertikalen Höhenmessung einen Sollwinkel α_{SOLL}=90° eingibt, was der Senkrechten entspricht.

Die Vergleichereinheit 24 gibt ausgangsseitig einen Fehlerwinkel Δα=α-α_{SOLL} aus, der die Abweichung der aktuellen räumlichen Ausrichtung des Laser-Entfernungsmeßgeräts 10 gegenüber der gewünschten räumlichen Ausrichtung angibt.

Der Fehlerwinkel Δα wird dann einer Steuereinheit 26 zugeführt, die in Abhängigkeit von dem Fehlerwinkel Δα eine Blinkfrequenz f berechnet, wobei die Blinkfrequenz f mit dem Fehlerwinkel Δα abnimmt.

Die von der Steuereinheit 26 bestimmte Blinkfrequenz f wird dann der Steuereinheit 14 zugeführt, wobei die Steuereinheit 14 den Laser 12 so ansteuert, daß der abgegebene Laserstrahl mit der Blinkfrequenz f blinkt. Der Benutzer kann dann anhand der Blinkfrequenz f des Lasers 12 erkennen, ob das Laser-Entfernungsmeßgerät 10 richtig ausgerichtet ist. Hierbei muß der Benutzer das Laser-Entfernungsmeßgerät 10 lediglich so bewegen, daß das Blinken schneller wird, bis der Laser 12 schließlich konstant strahlt, wenn das Laser-Entfernungsmeßgerät 10 entsprechend dem vorgegebenen Sollwinkel α_{SOLL} ausgerichtet ist und somit die eigentliche Entfernungsmessung erfolgen kann.

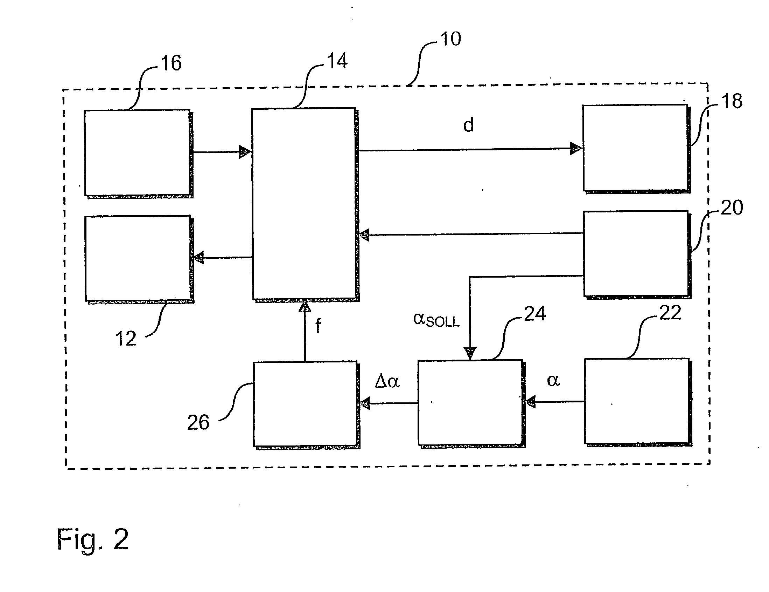

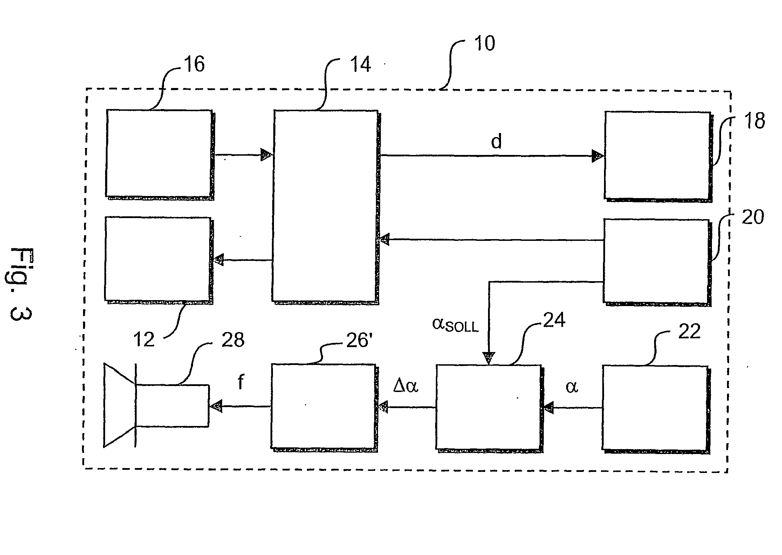

Das in Figur 3 dargestellte Ausführungsbeispiel stimmt weitgehend mit dem vorstehend beschriebenen und in den Figuren 1 und 2 dargestellten Ausführungsbeispiel überein, so daß im folgenden für entsprechende Bauteile dieselben Bezugszeichen verwendet werden und zur Vermeidung von Wiederholungen auf die vorstehende Beschreibung verwiesen wird.

Eine Besonderheit dieses Ausführungsbeispiels besteht darin, daß zur Unterstützung des Benutzers bei der räumlichen Ausrichtung des Laser-Entfernungsmeßgeräts 10 ein Lautsprecher 28 vorgesehen ist, der von einer Steuereinheit 26' mit einer variablen Frequenz f angesteuert wird. Die Steuereinheit 26' bestimmt die Frequenz f hierbei in Abhängigkeit von dem Fehlerwinkel Δα, wobei die Frequenz f mit dem Fehlerwinkel Δα abnimmmt.

Bei einer horizontalen Entfernungsmessung nimmt die Tonhöhe des von dem Lautsprecher 28 abgegebenen Signals also mit zunehmender Annäherung an die Horizontale zu, so daß der Benutzer das Laser-Entfernungsmeßgerät 10 in einfacher Weise korrekt ausrichten kann.

Bei einer vertikalen Höhenmessung nimmt die Tonhöhe des von dem Lautsprecher 28 abgegebenen Signals entsprechend mit der Annäherung an die Senkrechte zu.

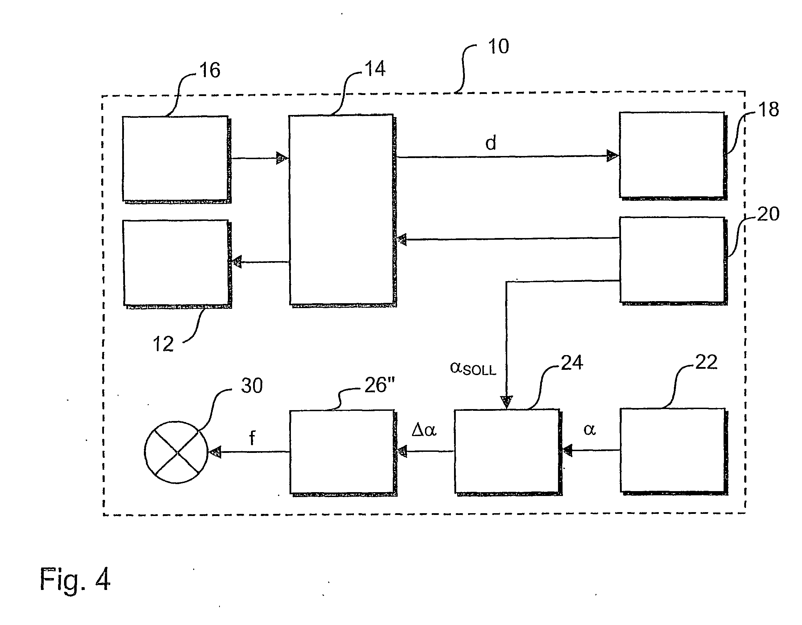

Das in Figur 4 dargestellte Ausführungsbeispiel stimmt ebenfalls weitgehend mit dem vorstehend beschriebenen und in den Figuren 1 und 2 dargestellten Ausführungsbeispiel überein, so daß im folgenden für entsprechende Bauteile dieselben Bezugszeichen verwendet werden und zur Vermeidung von Wiederholungen auf die vorstehende Beschreibung verwiesen wird.

Die Besonderheit dieses Ausführungsbeispiels besteht darin, daß zur Signalisierung der räumlichen Ausrichtung des Laser-Entfernungsmeßgeräts 10 eine Signallampe 30 vorgesehen ist, wobei die Signallampe 30 so an dem Laser-Entfernungsmeßgerät 10 angeordnet ist, daß der Benutzer die Signallampe 30 beim Anvisieren des Zielobjekts sieht. Diese Anordnung der Signallampe 30 ist vorteilhaft, da der Benutzer auf diese Weise gleichzeitig das Zielobjekt anvisieren und die räumliche Ausrichtung des Laser-Entfernungsmeßgeräts 10 überprüfen kann.

Die Signallampe 30 wird hierbei von einer Steuereinheit 26" mit einer Blinkfrequenz f angesteuert, wobei die Blinkfrequenz f mit der Annäherung des Laser-Entfernungsmeßgeräts 10 an den gewünschten Sollwinkel α_{SOLL} zunimmt. Die Signallampe 30 blinkt also um so schneller, je exakter das Laser-Entfernungsmeßgerät 10 ausgerichtet ist.

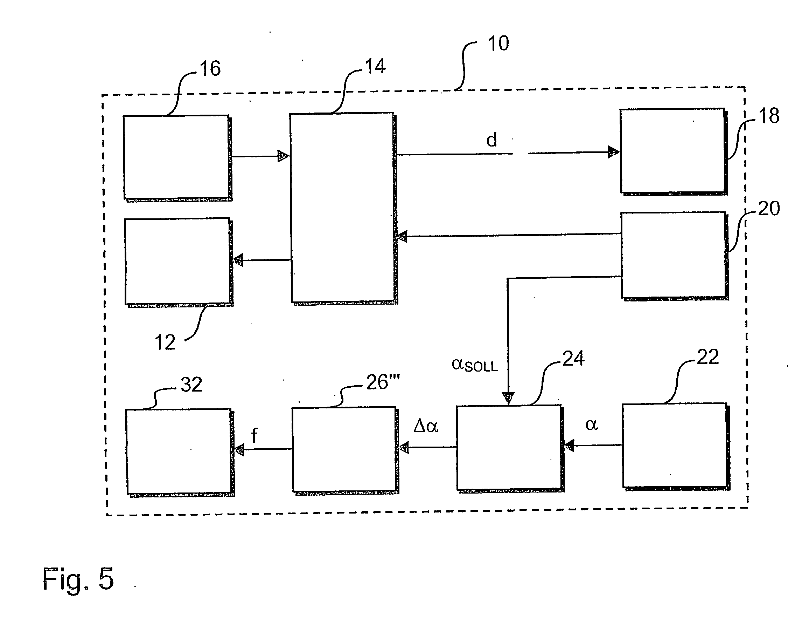

Das in Figur 5 gezeigte Ausführungsbeispiel soll dem Fachmann als weiterführende Information dienen und wird nicht beansprucht. Das in Figur 5 dargestellte Ausführungsbeispiel stimmt ebenfalls weitgehend mit dem vorstehend beschriebenen und in den Figuren 1 und 2 dargestellten Ausführungsbeispiel überein, so daß im folgenden für entsprechende Bauteile dieselben Bezugszeichen verwendet werden und zur Vermeidung von Wiederholungen auf die vorstehende Beschreibung verwiesen wird.

Die Besonderheit dieses Ausführungsbeispiels besteht darin, daß zur Signalisierung der räumlichen Ausrichtung des Laser-Entfernungsmeßgeräts 10 ein taktiler Signalgeber 32 vorgesehen ist, der ein taktiles Signal an den Benutzer abgibt, der das Laser-Entfernungsmeßgerät 10 in der Hand hält. Der taktile Signalgeber 32 gibt hierbei kurze Druckimpulse mit einer vorgegebenen Wiederholfrequenz f an den Benutzer ab, wobei die Wiederholfrequenz f von dem Fehlerwinkel Δα abhängt und von einer Steuereinheit 26"' berechnet wird.

Bei einer Annäherung der räumlichen Ausrichtung des Laser-Entfernungsmeßgeräts 10 an die gewünschte Ausrichtung nimmt die Wiederholfrequenz f hierbei zu, woran der Benutzer die räumliche Ausrichtung des Laser-Entfernungsmeßgeräts 10 überprüfen kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

### Bezugszeichen

- 10: Laser-Entfernungsmeßgerät
- 12: Laser
- 14: Steuereinheit
- 16: optischer Sensor
- 18: Display
- 20: Tastatur
- 22: Neigungssensor
- 24: Vergleichereinheit
- 26,26',26",26"': Steuereinheit
- 28: Lautsprecher
- 30: Signallampe
- 32: taktiler Signalgeber

## Patentansprüche

1. Entfernungsmeßgerät, insbesondere handgehaltenes Laser-Entfernungsmeßgerät, mit einem Lagesensor (22) zur Ermittlung der räumlichen Ausrichtung des Entfernungsmeßgeräts (10), wobei der Lagesensor (22) mit einem Signalgeber (12)verbunden ist und wobei der Signalgeber (12), welcher ein optischer Signalgeber (12) ist, von dem Lagesensor (22) zur Abgabe eines von der räumlichen Ausrichtung abhängigen und sinnlich wahrnehmbaren Signals ansteuerbar ist, **dadurch gekennzeichnet, daß** der optische Signalgeber (12) ein Laser ist, der Licht im sichtbaren Wellenlängenbereich emittiert und zur Entfernungsmessung dient.

2. Entfernungsmeßgerät nach Anspruch 1, **dadurch gekennzeichnet, daß** der optische Signalgeber (12) von dem Lagesensor (22) zur Abgabe eines optischen Signals ansteuerbar ist, dessen Intensität, Farbe, Helligkeit, Blinkfrequenz (f) und/oder Blinkdauer von der räumlichen Ausrichtung abhängig ist.

3. Entfernungsmeßgerät nach mindestens einem der vorhergehenden Ansprüche, **dadurch gekennzeichnet, daß** der Lagesensor (22) ein Neigungssensor ist.

4. Entfernungsmeßgerät nach mindestens einem der vorhergehenden Ansprüche, **dadurch gekennzeichnet, daß** zur Ansteuerung des Signalgebers (12) in Abhängigkeit von der räumlichen Ausrichtung eine eingangsseitig mit dem Lagesensor (22) und ausgangsseitig mit dem Signalgeber (12) verbundene Steuereinheit (24, 26, 14) vorgesehen ist.

5. Entfernungsmeßgerät nach Anspruch 4, **dadurch gekennzeichnet, daß** die Steuereinheit (24, 26, 14) eine Vergleichereinheit (24) aufweist, um ein von dem Lagesensor (22) abgegebenes Signal mit einem vorgegebenen Grenzwert zu vergleichen und in Abhängigkeit von dem Vergleich ein Steuersignal (f) zur Ansteuerung des Signalgebers (12) zu erzeugen.

## Claims

1. Distance measuring device, in particular a handheld laser distance measuring device, having a position sensor (22) for determining the spatial orientation of the distance measuring device (10), the position sensor (22) being connected to a signal generator (12), and the signal generator (12), which is an optical signal generator (12), being able to be driven by the position sensor (22) to emit a signal which is dependent on the spatial orientation and is perceivable to the senses, **characterized in that** the optical signal generator (12) is a laser which emits light in the visible wavelength range and is used to measure distances.

2. Distance measuring device according to Claim 1, **characterized in that** the optical signal generator (12) can be driven by the position sensor (22) to emit an optical signal, the intensity, colour, brightness, flashing frequency (f) and/or flashing duration of which is/are dependent on the spatial orientation.

3. Distance measuring device according to at least one of the preceding claims, **characterized in that** the position sensor (22) is an inclination sensor.

4. Distance measuring device according to at least one of the preceding claims, **characterized in that** a control unit (24, 26, 14) which is connected, on the input side, to the position sensor (22) and is connected, on the output side, to the signal generator (12) is provided for the purpose of driving the signal generator (12) on the basis of the spatial orientation.

5. Distance measuring device according to Claim 4, **characterized in that** the control unit (24, 26, 14) has a comparator unit (24) in order to compare a signal emitted by the position sensor (22) with a predefined limit value and to generate a control signal (f) for driving the signal generator (12) on the basis of the comparison.

## Revendications

1. Appareil de mesure de distance, en particulier appareil manuel de mesure de distance par laser,
présentant une sonde de position (22) qui détermine l'orientation spatiale de l'appareil (10) de mesure de distance,
la sonde de position (22) étant reliée à un émetteur (12) de signaux,
l'émetteur (12) de signaux qui est un émetteur (12) de signaux optiques pouvant être commandé par la sonde de position (22) pour délivrer un signal qui dépend de l'orientation spatiale et qui peut être détecté,
**caractérisé en ce que**
l'émetteur (12) de signaux optiques est un laser qui émet de la lumière dans la plage des longueurs d'onde visibles et qui sert à mesurer les distances.

2. Appareil de mesure de distance selon la revendication 1, **caractérisé en ce que** l'émetteur (12) de signaux optiques peut être commandé par la sonde de position (22) pour délivrer un signal optique dont l'intensité, la couleur, la luminosité, la fréquence de clignotement (f) et/ou la durée des clignotements dépendent de l'orientation spatiale.

3. Appareil de mesure de distance selon au moins l'une des revendications précédentes, **caractérisé en ce que** la sonde de position (22) est une sonde d'inclinaison.

4. Appareil de mesure de distance selon au moins l'une des revendications précédentes, **caractérisé en ce que** pour commander l'émetteur (12) de signaux en fonction de l'orientation spatiale, une unité de commande (24, 26, 14) reliée par son entrée à la sonde de position (22) et par sa sortie à l'émetteur (12) de signaux est prévue.

5. Appareil de mesure de distance selon la revendication 4, **caractérisé en ce que** l'unité de commande (24, 26, 14) présente une unité de comparaison (24) qui compare à une valeur prédéterminée un signal délivré par la sonde de position (22) et qui forme en fonction de la comparaison un signal de commande (f) qui commande l'émetteur (12) de signaux.
